# DEMANDE DE BREVET EUROPEEN

(11) **EP 4 579 095 A1**
(43) Date de publication de la demande: **02.07.2025**
(21) Numéro de dépôt: 24220770.2
(22) Date de dépôt: 17.12.2024
(51) Int. Cl.: F16B 37/06

(54) **DISPOSITIF DE FIXATION**

(30) Priorité: 28.12.2023 FR 2315441
(71) Demandeur: A. RAYMOND ET CIE, 38000 Grenoble (FR)
(72) Inventeur: GAO, Yunfan, 212009 Zhengjiang (Jiangsu) (CN); PAULIN, Grégory, 38000 Grenoble (FR)
(74) Mandataire: Ipside

(57) **Abrégé**

Écrou à débattement (100), comportant une collerette (120) servant surface de contact et une partie de corps (160), la collerette et la partie de corps sont reliées l'une à l'autre par deux bretelles de connexion opposées (140) présentant une déformation élastique vers l'extérieur, l'écrou est pourvu d'un passage vis (150) comportant un premier trou de fixation (122) dans la partie centrale de la collerette et un deuxième trou de fixation (162) dans la partie de corps

Une protubérance (124) faisant saillie vers la partie de corps est formée sur une surface de la collerette, et un renfoncement d'insertion dans lequel la protubérance est insérée est formé dans la partie de corps ;

Alternativement, une protubérance (124) faisant saillie vers une surface de la collerette est formée dans la partie de corps, et un renfoncement d'insertion dans lequel la protubérance est insérée est formé dans sur la surface de la collerette.

## Description

### Domaine technique de l'invention

La présente invention concerne le domaine technique des dispositifs de fixation mécanique, plus précisément des écrous à débattement utilisés pour fixer des composants dans des véhicules, tels que ceux présents sur un tableau de bord.

### Technique antérieure

Il est connu que des écrous sont couramment utilisés pour fixer différents éléments dans un véhicule. Ces éléments peuvent inclure des compteurs, des boîtes à gants et d'autres composants généralement montés sur le tableau de bord.

Ces écrous sont généralement insérés dans un logement du support, avec une vis vissée à travers un trou de fixation. L'écrou et la vis travaillent ensemble pour fixer la pièce montée sur le tableau de bord.

Dans certains cas, ces écrous peuvent être conçus pour être amovibles afin de permettre le démontage ou le remplacement des éléments fixés. Cependant, le processus de démontage peut être difficile et peut risquer d'endommager l'écrou ou de le faire tomber à l'intérieur du tableau de bord, ce qui peut entraîner des bruits indésirables.

De plus, pendant le processus de vissage, l'écrou peut commencer à tourner, ce qui peut potentiellement causer un choc si le vissage est effectué rapidement. Ce choc peut potentiellement endommager l'écrou, par exemple, en cassant les bretelles de connexion.

Par conséquent, il existe un besoin reconnu pour une solution améliorée, en particulier une qui peut assurer la stabilité de l'écrou pendant le processus de vissage, prévenir les chocs pendant le vissage et faciliter le processus de démontage sans causer de dommages ou de bruits indésirables.

### Exposé de l'invention

La présente invention vise à remédier à ces inconvénients, en proposant un écrou à débattement, qui assure la stabilité de l'écrou pendant le processus de vissage, prévient les chocs pendant le vissage et facilite le processus de démontage sans causer de dommages ou de bruits indésirables.

À cet effet, selon un aspect de l'invention, la présente invention concerne l'écrou à débattement qui comporte une collerette servant de surface de contact et une partie de corps, la collerette et la partie de corps sont reliées l'une à l'autre par deux bretelles de connexion opposées présentant une déformation élastique vers l'extérieur, l'écrou à débattement est pourvu d'un passage vis comportant un premier trou de fixation dans la partie centrale de la collerette et un deuxième trou de fixation dans la partie de corps.

Une protubérance faisant saillie vers la partie de corps est formée sur une surface de la collerette, et un renfoncement d'insertion dans lequel la protubérance est insérée est formé dans la partie de corps ;

Alternativement, une protubérance faisant saillie vers une surface de la collerette est formée dans la partie de corps, et un renfoncement d'insertion dans lequel la protubérance est insérée est formé sur la surface de la collerette.

Selon un mode de réalisation, l'écrou à débattement est pourvu de deux nervures disposées en diagonale qui relient la collerette aux bretelles de connexion, lesdites nervures étant conçues pour entrer en contact avec une tôle.

Selon un mode de réalisation, les bretelles de connexion comportent des crans de maintien situés à proximité de la collerette.

Selon un mode de réalisation, les crans de maintien sont disposés sous forme d'étages, et les bretelles de connexion présentent des renflements situés entre deux étages des crans de maintien.

Selon un mode de réalisation, la protubérance présente une forme rectiligne, et optionnellement, la protubérance comporte deux parties séparées par le passage vis.

Selon un mode de réalisation, la protubérance est rétractée dans un état de contact étroit avec une surface intérieure de renfoncement d'insertion lorsqu'une vis est fixée.

Selon un mode de réalisation, les bretelles de connexion opposées présentent chacune essentiellement une forme V lorsqu'elles s'écartent vers l'extérieur.

Selon un mode de réalisation, l'écrou à débattement est en plastique.

Selon un mode de réalisation, l'écrou à débattement est en métal. Selon un autre aspect de la présente invention, un ensemble comprend l'écrou à débattement selon la présente invention et une vis.

### Brève description des figures

D'autres avantages, buts et caractéristiques de la présente invention ressortent de la description qui suit faite, dans un but explicatif et nullement limitatif, en regard des dessins annexés, dans lesquels :
La figure 1 présente une vue frontale d'un écrou à débattement selon une réalisation de la présente invention.
La figure 2 illustre une vue de dessus d'un écrou à débattement selon un exemple de la présente invention.
La figure 3 montre une vue en coupe d'un écrou à débattement selon une réalisation illustrative de la présente invention.
La figure 4 représente une vue en coupe de la partie supérieure d'un écrou à débattement conformément à un exemple de la présente invention.
La figure 5 offre une vue rapprochée d'un écrou à débattement en prise avec une pièce de support selon une réalisation de la présente invention.
La figure 6A présente une vue rapprochée d'un écrou à débattement en prise avec une pièce de support selon un exemple de la présente invention.
La figure 6B montre une vue rapprochée d'un écrou à débattement en prise avec une pièce de support selon une réalisation illustrative de la présente invention.
La figure 7 illustre une vue en perspective éclatée d'un ensemble constitué d'un écrou à débattement et d'une vis positionnée au-dessus d'une pièce de support selon une réalisation de la présente invention.
La figure 8 présente une vue en coupe d'un ensemble constitué d'un écrou à débattement et d'une vis en prise dans une pièce de support conformément à un exemple de la présente invention.
La figure 9 représente une vue en coupe d'un ensemble dans lequel une vis est en interface avec un écrou à débattement à l'intérieur d'une pièce de support selon une réalisation illustrative de la présente invention.

### Description des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

L'écrou à débattement 100 selon l'invention peut être fabriqué par moulage de matière plastique connue, par exemple par injection thermoplastique, plus particulièrement en plastiques techniques tels que des polyamides, des résines d'acétal, des polyesters thermoplastiques. De préférence, l'écrou à débattement 100 est de matériaux connus permettant de résister au vieillissement et à la température.

Alternativement, l'écrou à débattement 100 selon l'invention peut être fabriqué en métal.

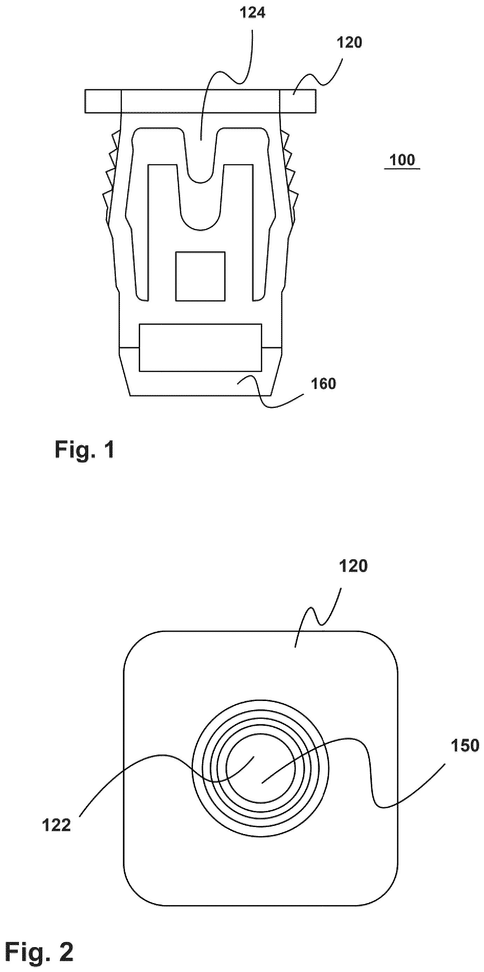

Le Dans le mode de réalisation représenté selon la figure 1, l'écrou à débattement est présenté dans une vue frontale, mettant en évidence la conception générale et l'agencement de ses composants. L'écrou à débattement, désigné par le chiffre de référence 100, comprend une collerette 120 à une extrémité, qui sert de surface de contact pour s'interfacer avec d'autres composants, tels qu'un tableau de bord 300 ou une pièce de support.

La collerette 120, de préférence au centre, est pourvue d'un premier trou de fixation 122, qui fait partie du passage vis 150 qui permet l'insertion et la fixation d'une vis 200. Sur la surface de la collerette 120, il y a une protubérance 124, qui est conçue pour faire saillie vers la partie de corps 160 de l'écrou à débattement 100. Cette protubérance 124 est une caractéristique structurelle qui peut s'engager avec un renfoncement d'insertion correspondant 184 dans la partie de corps 160 pour faciliter l'alignement et la stabilité de l'écrou lorsqu'il est assemblé.

La partie de corps 160 de l'écrou à débattement 100 est reliée à la collerette 120 par deux bretelles de connexion opposées 140. Ces bretelles 140 sont conçues pour présenter une déformation élastique vers l'extérieur, ce qui permet une certaine flexibilité et résilience dans la structure de l'écrou. Les bretelles de connexion 140 sont essentielles à la capacité de l'écrou à débattement de maintenir sa position et de résister à la rotation lorsque la vis 200 est fixée.

La figure 2 présente une vue de dessus de l'écrou à débattement. Le passage vis 150 permet l'insertion et la fixation d'une vis 200. Le premier trou de fixation 122, situé dans la collerette 120, fait partie intégrante du passage vis 150 et est le point par lequel la vis 200 pénètre dans l'écrou à débattement 100.

La figure 2 illustre l'alignement et le positionnement du premier trou de fixation 122 dans la collerette 120, offrant une vue claire de son emplacement et de son rôle dans l'assemblage de l'écrou à débattement avec une vis 200.

La représentation du premier trou de fixation 122 par rapport au passage vis 150 est un aspect de l'écrou à débattement qui est central à sa fonction en tant que dispositif de fixation. Cette vue aide à transmettre la facilité avec laquelle la vis 200 peut être alignée et insérée dans l'écrou à débattement 100.

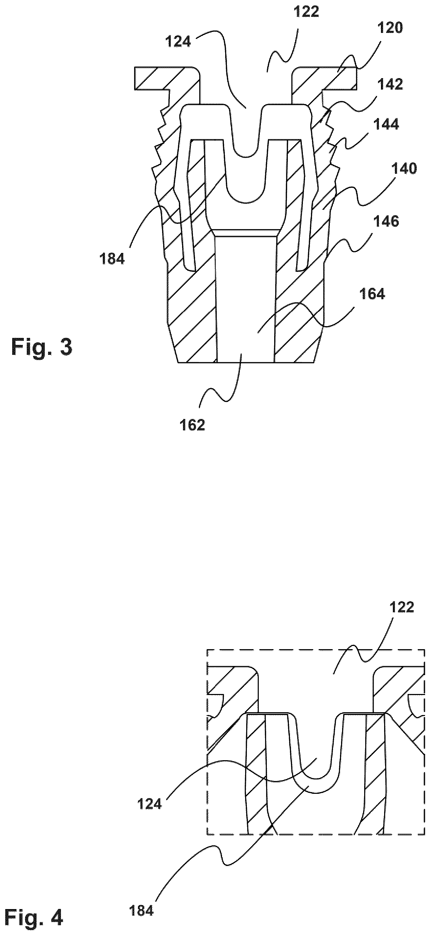

La figure 3 présente une vue en coupe de l'écrou à débattement, une réalisation de la présente invention. Dans cette variante, la protubérance 124 est formée sur la surface de la collerette 120 et fait saillie vers la partie de corps 160. Le renfoncement d'insertion correspondant 184 est formé dans la partie de corps 160 pour recevoir la protubérance 124. Cette configuration est conçue pour assurer un alignement correct et empêcher le mouvement de rotation de l'écrou à débattement 100 lorsqu'une vis 200 est insérée et fixée.

La figure 3 montre l'interaction entre la protubérance 124 et le renfoncement d'insertion 184, démontrant comment la protubérance 124 s'insère dans le renfoncement 184 pour sécuriser la position de l'écrou à débattement. La vue en coupe montre également une représentation claire du passage vis 150, qui comprend le premier trou de fixation 122 dans la collerette 120 et le deuxième trou de fixation 162 dans la partie de corps 160, à travers lesquels la vis 200 est destinée à passer.

En alternative à la réalisation non illustrée dans la figure 3, la protubérance 124 est formée dans la partie de corps 160 et fait saillie vers la collerette 120, le renfoncement d'insertion 184 étant formé sur la surface de la collerette 120 pour recevoir la protubérance 124. Cette configuration alternative représenterait un agencement structurel différent visant à atteindre les mêmes objectifs d'alignement et de stabilité.

La figure 4, qui montre une vue en coupe de la partie supérieure d'un écrou à débattement, donne un aperçu du mouvement relatif entre la protubérance 124 et le renfoncement d'insertion 184.

Dans cette figure, la protubérance 124, qui est située sur la collerette 120 ou la partie de corps 160 selon l'alternative revendiquée 1 qui est représentée, est conçue pour s'ajuster parfaitement dans le renfoncement d'insertion 184. La figure illustre comment, lors de l'insertion d'une vis 200 à travers le passage vis 150, la protubérance 124 peut se déplacer par rapport au renfoncement d'insertion 184. Ce mouvement est particulièrement pertinent lorsque la vis est serrée ou desserrée, car la protubérance 124 peut soit faire saillie dans le renfoncement d'insertion 184, soit s'en retirer.

Le mouvement relatif entre ces deux composants est une considération de conception qui garantit que l'écrou à débattement reste solidement positionné contre les forces de rotation lorsque la vis est serrée. Cette fonctionnalité est bénéfique pour faciliter le processus de démontage, permettant à la protubérance 124 de se rétracter en douceur du renfoncement d'insertion 184 sans causer de dommages ni créer de bruit indésirable.

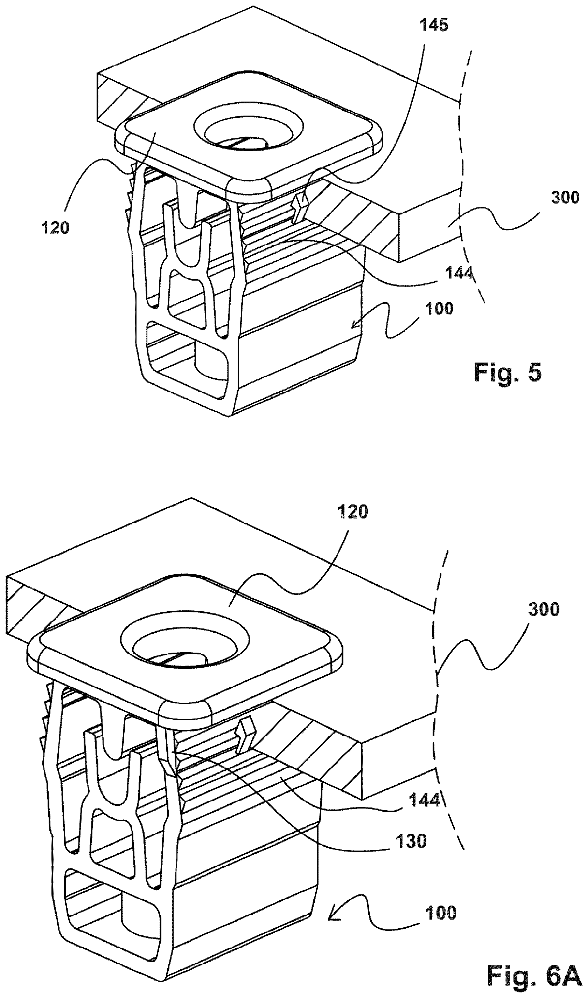

La figure 5 présente une vue rapprochée d'un écrou à débattement en prise avec une feuille de support, mettant en évidence la présence de renflements 145. Dans cette mise en oeuvre particulière, les renflements 145 sont positionnés de manière stratégique sur les bretelles de connexion 140, situées entre les crans de maintien 144.

Avantageusement, la présence des renflements 145 dans ce contexte permet d'améliorer les performances mécaniques et la fonctionnalité de l'écrou à débattement. Plus précisément, les renflements 145 servent à renforcer les bretelles de connexion 140, offrant une résistance accrue aux forces exercées lors de l'installation et de la fixation de l'écrou à débattement. Ce renforcement contribue à prévenir la déformation surélastique ou la rupture potentielle des bretelles 140, maintenant ainsi l'intégrité structurelle de l'écrou à débattement sous contrainte.

De plus, les renflements 145 contribuent au positionnement précis et sécurisé de l'écrou à débattement lorsqu'il est en prise avec la feuille de support. Les étapes progressives créées par les crans de maintien 144 et les renflements 145 permettent une insertion contrôlée dans la feuille de support, garantissant que l'écrou à débattement est correctement positionné. Cette fonctionnalité est particulièrement bénéfique lors du processus d'assemblage, car elle fournit un retour d'information clair à l'installateur et empêche l'écrou à débattement de tourner ou de se désaligner lorsque la vis 200 est enfoncée à travers le passage vis 150.

La figure 5 illustre l'écrou à débattement dans un état d'engagement avec la feuille de support, montrant comment les renflements 145 interagissent avec le matériau de la feuille de support pour obtenir ces effets techniques.

La vue rapprochée offre une représentation détaillée des renflements 145 par rapport aux composants environnants, démontrant leur rôle dans la conception globale et l'efficacité de l'écrou à débattement en tant que dispositif de fixation.

Dans la mise en oeuvre spécifique illustrée à la figure 6A, l'écrou à débattement intègre des nervures 130, qui sont des éléments structurels reliant la collerette 120 aux bretelles de connexion 140. Ces nervures 130 sont, de préférence, disposées de manière diagonale, améliorant ainsi la conception et la fonctionnalité de l'écrou à débattement. Les nervures 130 sont conçues pour entrer en contact direct avec la feuille de support ou le tableau de bord 300. Ce contact n'est pas simplement fortuit ; il sert à empêcher l'écrou à débattement de tourner ou de se déplacer pendant le processus de vissage.

La présence des nervures 130 garantit que l'écrou à débattement reste correctement aligné avec le passage de vis 150, permettant une insertion fluide et stable de la vis 200. La figure 6A illustre l'écrou à débattement en engagement avec la feuille de support, les nervures 130 entrant en contact et fournissant les effets techniques mentionnés ci-dessus. La figure offre une vue détaillée de la manière dont les nervures 130 interagissent avec la feuille de support, démontrant leur rôle dans le renforcement de l'écrou à débattement et l'amélioration de ses capacités de fixation. De manière avantageuse, l'inclusion des nervures 130 dans la conception de l'écrou à débattement permet de résoudre plusieurs problèmes, notamment la stabilité de l'écrou pendant le processus de vissage, la prévention des chocs pendant le vissage et la facilitation du processus de retrait sans causer de dommages ni de bruits indésirables. Les nervures 130 contribuent à un système de fixation plus efficace et fiable, plus facile à installer et à retirer, et offrant une prise sûre pour les composants qu'il est conçu pour fixer.

Avantageusement, la présence des nervures 130 atténue l'oscillation de l'écrou 100 causée par l'ouverture surdimensionnée du panneau de support lorsque la vis n'est pas installée.

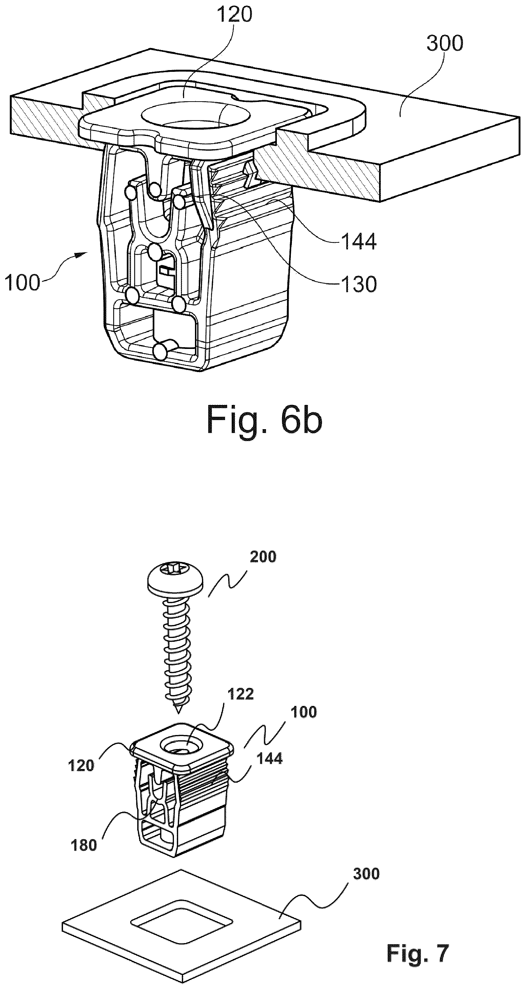

Dans la mise en oeuvre représentée à la figure 6B, l'écrou à débattement présente des nervures 130 plus longues par rapport à celles illustrées à la figure 6A. Ces nervures prolongées 130 servent de liaison entre la collerette 120 et les bretelles de connexion 140, leur longueur accrue offrant des avantages supplémentaires à la conception et à la fonctionnalité de l'écrou à débattement.

Avantageusement, le fait que les nervures 130 sont plus longues permet de renforcer davantage le support et la stabilité fournis à l'écrou à débattement.

De plus, les nervures 130 plus longues peuvent aider à empêcher l'écrou à débattement de tourner ou de se déplacer pendant le processus de vissage. La zone de contact étendue fournie par les nervures plus longues peut offrir plus de friction et de résistance au mouvement, garantissant ainsi que l'écrou à débattement reste correctement aligné avec le passage de vis 150. Cet alignement est essentiel pour une insertion fluide et stable de la vis 200 et pour l'intégrité globale de l'ensemble fixé.

La figure 6B montre une vue rapprochée de l'écrou à débattement lorsqu'il s'engage avec la feuille de support, les nervures plus longues 130 entrant en contact et fournissant les effets techniques décrits. La figure offre une représentation visuelle de la position des nervures prolongées 130 par rapport aux autres composants de l'écrou à débattement et à la feuille de support, mettant en évidence leur rôle dans l'amélioration des performances de l'écrou à débattement en tant que dispositif de fixation.

La présence de nervures plus longues 130 dans la conception de l'écrou à débattement permet de résoudre les problèmes liés à la stabilité pendant le processus de vissage, à la prévention des chocs pendant le vissage et à la facilitation du processus de retrait sans causer de dommages ni de bruits indésirables. Les nervures plus longues 130 contribuent à une solution de fixation plus efficace et fiable, offrant une durabilité accrue et une prise sûre pour les composants qu'il est conçu pour fixer.

La figure 7 présente une vue en perspective éclatée d'un ensemble comprenant un écrou à débattement et une vis positionnée au-dessus d'une feuille de support. Cette vue est particulièrement utile pour comprendre la relation entre l'écrou à débattement, la vis et la feuille de support avant l'assemblage.

Dans cette représentation, la vis 200 est positionnée au-dessus de l'écrou à débattement, alignée avec le passage de vis 150, qui comprend le premier trou de fixation 122 dans la collerette 120 et le deuxième trou de fixation 162 dans la partie de corps 160.

La feuille de support ou le tableau de bord 300 est également représenté, et c'est le composant auquel l'écrou à débattement sera fixé à l'aide de la vis 200.

Cette figure montre l'orientation et l'alignement de l'écrou à débattement et de la vis par rapport à la feuille de support et démontre que l'écrou à débattement est conçu pour être facilement positionné sur la feuille de support, la vis étant ensuite insérée et serrée pour compléter la fixation.

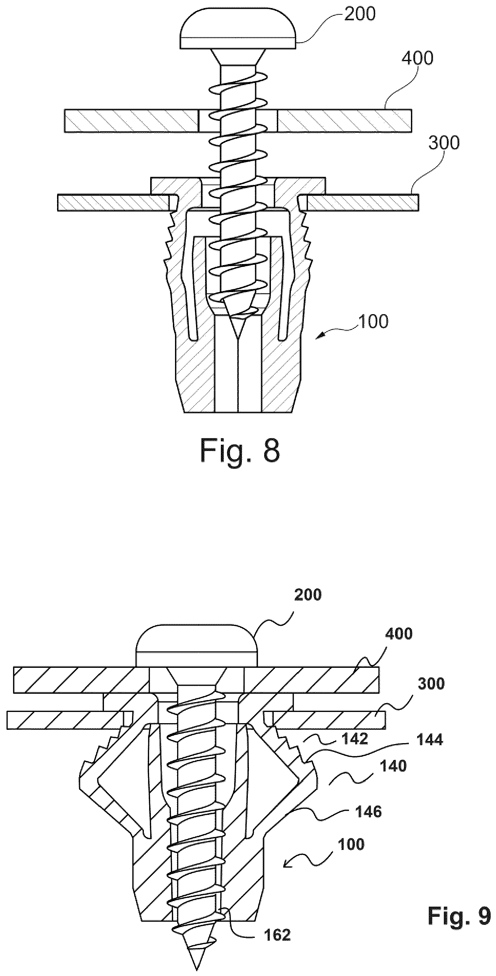

La figure 8 présente une vue en coupe d'un ensemble constitué d'un écrou à débattement et d'une vis engagée dans une pièce de support. Cette vue est essentielle pour illustrer l'interaction entre l'écrou à débattement 100 et la vis 200 pendant le processus de fixation.

Dans cette représentation, l'écrou à débattement 100 est montré dans un état où il a été positionné sur la feuille de support ou le tableau de bord 300. La collerette 120 de l'écrou à débattement est en contact avec la surface de la feuille de support, fournissant une base stable pour l'écrou. La vis 200 est insérée à travers la feuille de support et dans l'écrou à débattement, passant par le premier trou de fixation 122 dans la collerette 120 et s'engageant avec le deuxième trou de fixation 162 dans la partie de corps 160.

La vue en coupe de la figure 8 met en évidence l'engagement de la protubérance 124 avec le renfoncement d'insertion 184, qui est une caractéristique conçue pour empêcher l'écrou à débattement de tourner pendant le processus de fixation. Cet engagement garantit que l'écrou à débattement reste correctement aligné avec le passage de vis 150, permettant une connexion sécurisée et stable. De plus, la figure montre les bretelles de connexion 140, qui fournissent de l'élasticité et une résistance à la force de serrage de la vis. Si présents, les renflements 145 et les crans de maintien 144 sur les bretelles de connexion seraient également visibles, contribuant à la capacité de l'écrou à débattement à maintenir sa position et à résister à la déformation sous charge.

La figure 9 illustre une vue en coupe d'un ensemble où une vis est en interface avec un écrou à débattement dans une feuille de support. Cette vue offre un aperçu détaillé de la dernière étape du processus d'installation, où la vis 200 est entièrement engagée avec l'écrou à débattement 100, le fixant à la feuille de support ou au tableau de bord 300.

Dans cette représentation particulière, l'écrou à débattement 100 est montré dans son état opérationnel, la vis 200 ayant été insérée à travers la feuille de support et serrée en place. La collerette 120 de l'écrou à débattement est en contact direct avec la feuille de support, agissant comme une base stable qui répartit la force de la vis serrée sur une plus grande surface, réduisant ainsi les concentrations de contrainte et les dommages potentiels à la feuille de support.

La protubérance 124 est engagée dans le renfoncement d'insertion 184, qui est une caractéristique de conception qui empêche l'écrou à débattement de tourner ou de se déplacer pendant le processus de serrage. Cet engagement garantit que l'écrou à débattement reste correctement aligné avec le passage de vis 150, permettant une connexion sécurisée et stable qui résiste au desserrage au fil du temps.

Les bretelles de connexion 140 confèrent à l'écrou à débattement la flexibilité nécessaire pour accommoder de légers désalignements et absorber les vibrations, ce qui peut être particulièrement utile dans les applications automobiles où l'écrou à débattement peut être soumis à des charges dynamiques. Si la conception comprend des renflements 145 et des crans de maintien 144, ceux-ci contribueraient à la capacité de l'écrou à débattement à maintenir sa position et à résister à la déformation sous l'effet de la vis serrée.

La vue en coupe de la figure 9 est une représentation claire de l'écrou à débattement dans sa position finale verrouillée au sein d'un ensemble. Elle démontre la fixation sécurisée obtenue par la conception de l'écrou à débattement et de la vis, mettant en évidence l'efficacité des caractéristiques de l'écrou à débattement pour fournir une solution de fixation stable et fiable. Cette figure sert de guide visuel pour comprendre l'état entièrement assemblé de l'écrou à débattement et son interaction avec la vis et la feuille de support.

Les étapes d'installation de l'écrou selon l'invention sont illustrées par les figures 7, 8 et 9.

Tout d'abord, placez l'écrou à débattement 100 sur la feuille de support 300, en l'alignant sur l'emplacement prédéfini où l'écrou sera fixé. La collerette 120 de l'écrou à débattement entrera en contact avec la surface de la feuille de support, et si présentes, les nervures 130 aideront à stabiliser la position de l'écrou. Assurez-vous que le premier trou de fixation 122 est aligné avec le trou dans la feuille de support où la vis 200 sera insérée.

Ensuite, insérez la vis 200 à travers les trous alignés dans la feuille de support 300 et l'écrou à débattement 100. La vis passera par le premier trou de fixation 122 dans la collerette 120 et continuera dans le deuxième trou de fixation 162 dans la partie de corps 160 de l'écrou à débattement. À cette étape, la vis n'est pas encore serrée, mais elle est maintenue en place, prête pour la fixation.

À l'aide d'un outil approprié, tel qu'un tournevis ou une perceuse électrique, commencez à serrer la vis 200 dans l'écrou à débattement 100.Lorsque la vis est serrée, la protubérance 124 et le renfoncement d'insertion 184 (le cas échéant) s'engageront pour empêcher l'écrou de tourner. Les bretelles de connexion 140, éventuellement renforcées par des renflements 145 et des crans de maintien 144, fourniront élasticité et résistance à la force de serrage. Continuez à serrer la vis jusqu'à ce qu'elle soit solidement fixée, en veillant à ce que l'écrou à débattement soit fermement attaché à la feuille de support 300. La position finale de l'ensemble vis et écrou sera telle que l'écrou à débattement sera verrouillé en place, la protubérance 124 étant complètement engagée dans le renfoncement d'insertion 184, assurant une fixation stable et sécurisée.

Les étapes suivantes sont données pour illustrer comment retirer l'écrou à débattement de l'état assemblé tel qu'illustré à la figure 9.

Commencez par utiliser un outil approprié, tel qu'un tournevis ou une perceuse électrique, pour desserrer la vis 200 fixée dans l'écrou à débattement 100. Tournez l'outil dans le sens antihoraire pour dévisser la vis de l'écrou à débattement. Continuez à tourner jusqu'à ce que la vis soit complètement désengagée du deuxième trou de fixation 162 dans la partie de corps 160 de l'écrou à débattement.

À mesure que la vis 200 est desserrée et rétractée, la protubérance 124 se désengagera progressivement du renfoncement d'insertion 184. Ce désengagement est facilité par la conception de l'écrou à débattement, qui permet à la protubérance de se rétracter en douceur du renfoncement sans endommager l'écrou ou la feuille de support 300.

Une fois que la vis 200 est complètement dévissée, retirez-la de la feuille de support 300. Avec la vis ne maintenant plus l'écrou à débattement en place, l'écrou pourra être retiré de la feuille de support.

Soulevez l'écrou à débattement 100 de la feuille de support 300. Si l'écrou à débattement est équipé de caractéristiques telles que des bretelles de connexion 140, des renflements 145 et des crans de maintien 144, ils peuvent offrir une certaine résistance lors du retrait de l'écrou. Appliquez soigneusement une légère force vers l'extérieur sur les bretelles de connexion si elles sont en contact avec la feuille de support pour faciliter le retrait de l'écrou.

Le processus de retrait de l'écrou à débattement est conçu pour être simple et non destructif, permettant ainsi une maintenance, une réparation ou un remplacement facile des composants selon les besoins de l'application dans laquelle l'écrou à débattement est utilisé.

### LISTE DES SIGNES DE RÉFÉRENCE

**Tableaux 1**

| Références | Désignations |
|---|---|
| 100 | Écrou à débattement |
| 120 | Collerette |
| 160 | Partie de corps |
| 140 | Bretelles de connexion |
| 150 | Passage vis |
| 122 | Premier trou de fixation |
| 162 | Deuxième trou de fixation |
| 164 | Fût écrou |
| 124 | Protubérance |
| 200 | Vis |
| 130 | Nervure |
| 300 | Panneau de support/Tableau de bord |
| 144 | Cran de maintien |
| 145 | Renflements |
| 184 | Renfoncement d'insertion |

## Revendications

1. Écrou à débattement (100), comportant une collerette (120) servant surface de contact et une partie de corps (160), la collerette (120) et la partie de corps (160) sont reliées l'une à l'autre par deux bretelles de connexion opposées (140) présentant une déformation élastique vers l'extérieur, l'écrou à débattement (100) est pourvu d'un passage vis (150) comportant un premier trou de fixation (122) dans la partie centrale de la collerette (120) et un deuxième trou de fixation (162) dans la partie de corps (160),
dans lequel
une protubérance (124) faisant saillie vers la partie de corps (160) est formée sur une surface de la collerette (120), et un renfoncement d'insertion (184) dans lequel la protubérance (124) est insérée est formé dans la partie de corps (160),
ou
une protubérance (124) faisant saillie vers une surface de la collerette (120) est formée dans la partie de corps (160), et un renfoncement d'insertion (184) dans lequel la protubérance (124) est insérée est formé dans sur la surface de la collerette (120).

2. Écrou à débattement (100) selon la revendication 1, dans lequel, l'écrou à débattement (100) est pourvu de deux nervures (130) disposées en diagonale qui relient la collerette (120) aux bretelles de connexion (140), lesdites nervures (130) étant conçues pour entrer en contact avec une tôle (300).

3. Écrou à débattement (100) selon la revendication 1 ou 2, dans lequel, les bretelles de connexion comportent des crans de maintien (144) situés à proximité de la collerette (120).

4. Écrou à débattement (100) selon la revendication 3, dans lequel, les crans de maintien (144) sont disposés sous forme d'étages, et les bretelles de connexion (140) présentent des renflements (145) situées entre deux étages des crans de maintien (144).

5. Écrou à débattement (100) selon l'une quelconque des revendications précédentes, dans lequel, la protubérance (124) présente une forme rectiligne, et optionnellement, la protubérance (124) comporte deux parties séparées par le passage vis (150).

6. Écrou à débattement (100) selon l'une quelconque des revendications précédentes, dans lequel, la protubérance (124) est rétractée dans un état de contact étroit avec une surface intérieure de renfoncement d'insertion (184) lorsqu'une vis (200) est fixée.

7. Écrou à débattement (100) selon l'une quelconque des revendications précédentes, dans lequel, les bretelles de connexion opposées (140) présentent chacune essentiellement une forme V lorsqu'elles s'écartent vers l'extérieur.

8. Écrou à débattement (100) selon l'une quelconque des revendications précédentes, caractérisé qu'il est en plastique.

9. Écrou à débattement (100) selon l'une quelconque des revendications 1 à 7, caractérisé qu'il est en métal.

10. Ensemble comportant un écrou à débattement (100) selon l'une quelconque des revendications précédentes et une vis (200).
